# EUROPEAN PATENT SPECIFICATION

(11) **EP 2 832 268 B1**
(45) Date of publication and mention of the grant of the patent: **02.11.2016**
(21) Application number: 14178074.2
(22) Date of filing: 22.07.2014
(51) Int. Cl.: A47J 27/04

(54) **An apparatus for cooking food by steaming**
Vorrichtung zum Kochen von Nahrungsmitteln durch Dämpfen
Appareil de cuisson d'aliments à la vapeur

(30) Priority: 31.07.2013 IT VR20130183
(43) Date of publication of application: 04.02.2015
(73) Proprietor: Elettroplastica S.p.A., 25039 Travagliato (BS) (IT)
(72) Inventor: Chiarini, Renato, 25039 TRAVAGLIATO (Brescia) (IT)
(74) Representative: Lissandrini, Marco

(56) References cited:
- EP-A1- 1 724 530
- EP-A1- 1 815 773
- WO-A1-2011/007242
- US-A- 5 649 476

## Description

This invention relates to an apparatus for cooking foodstuffs by means of steam. In other words, the apparatus of the invention falls within the field of devices which produce steam for cooking foodstuffs. More specifically, the apparatus of the invention allows producing steam and cooking the foodstuffs in a single module.

According to the prior art for example disclosed in document US5649476, an apparatus for the steam cooking of foodstuffs typically comprises a boiler for heating liquid and internally defining a space for containing the liquid. The liquid is usually water.

The containing space is operatively (not physically) divided into a first space for containing the liquid to be boiled and a second space for forming the steam, located above the first space and in fluid connection therewith. In other words, in use, the first space contains the liquid and the second space, the steam.

Obviously, the boiler comprises heating means associated with the containing space for heating the liquid contained therein in order to generate the steam.

Prior art apparatuses also comprise a foodstuffs cooking container in fluid communication with the second space of the boiler in order to receive the steam therefrom. Usually, communication between the container and the boiler occurs through a duct.

That way, the boiler heats the liquid which comes to a boil and passes by way of the duct into the container where the foodstuffs are cooked. In a first type of prior art apparatus, the boiler is juxtaposed with the container and the duct is located at the top of the two vessels.

This prior art, however, is not free of disadvantages.

In effect, to have a continuous supply of steam, it is necessary to top up the boiler and to wait for the newly added amount of liquid to be heated. More in detail, the boiler has a hole and a related sealed closure system (preferably a cap) at the second space, for filling the liquid into the first space.

Consequently, it is necessary to periodically top up the boiler, close it (by means of the sealed closure system) and wait for the liquid to come to the boil again. That means time lost not only topping up the boiler but also waiting for the liquid to reach the boil.

Alternatively to this steam cooking system, another apparatus known in the prior art comprises a topping up tank located above the boiler and in fluid connection therewith by means of a feed duct. The apparatus also comprises a valve interposed in the feed duct in such a way as to open the duct when necessary. More specifically, in this second prior art apparatus, the boiler comprises a level sensor which opens the valve when the level of the liquid falls below a preset threshold. In this situation, the liquid in the tank is gravity-fed into the boiler in such a way as to allow automatic topping up on a continual basis.

This second type of apparatus, however, also has some disadvantages, substantially connected with the time needed for heating the added liquid. In effect, as with the first type prior art apparatus, when the boiler is topped up, it is necessary to wait a certain length of time before it starts producing steam again. Indeed, the amount of water fed from the tank to the boiler is at low temperature (substantially ambient temperature) and must be heated for it to reach the boiling point.

Furthermore, in both of the cases mentioned above, cleaning the containing space inside the boiler is problematical because it is a substantially a sealed space (except for the filler opening through which it is very difficult to perform cleaning operations).

In this situation, therefore, this invention has for an aim to provide a steam cooking apparatus which overcomes the above mentioned disadvantages.

More specifically, the aim of this invention is to provide an apparatus for the steam cooking of foodstuffs which allows reducing the down time due to the absence of steam following topping up of the liquid containing space.

Another aim of this invention is to provide apparatus for the steam cooking of foodstuffs which makes cleaning the liquid containing space easier.

The above aims are substantially achieved by an apparatus for the steam cooking of foodstuffs as described in the appended claims.

Other features and the advantages of the invention will become more apparent from the detailed description which follows of a preferred embodiment of an apparatus for the steam cooking of foodstuffs as illustrated in the accompanying drawings, in which:
- Figure 1 shows the apparatus of this invention in an axonometric view, with some parts exploded;
- Figure 2 shows the apparatus of Figure 1 in a top view with some parts removed to better illustrate others;
- Figure 3 shows the apparatus of the invention in a side axonometric view from above;
- Figure 4 is a transversely cross sectioned enlarged axonometric side view of Figure 3;

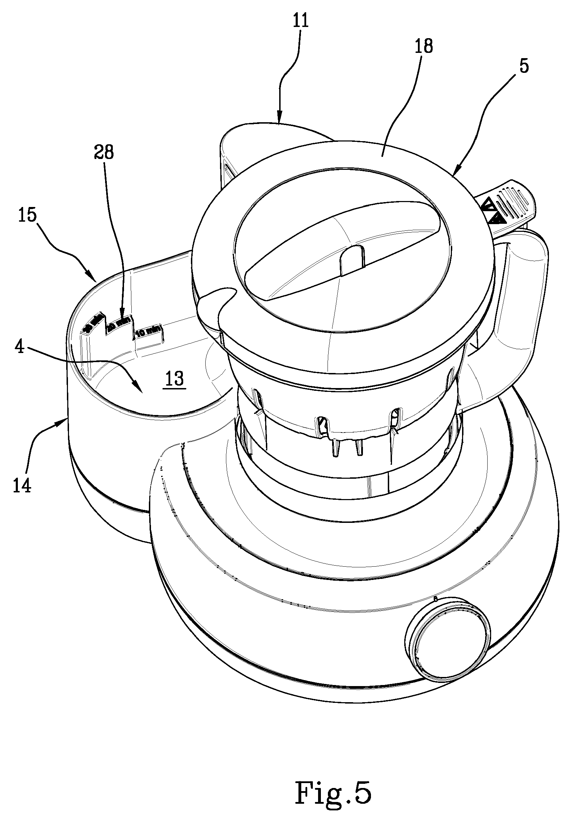

- Figure 5 shows the apparatus according to the invention in a front axonometric view from above; and
- Figure 6 shows a partly cross sectioned axonometric view of an alternative embodiment of the apparatus.

With reference to the drawings listed above, the reference numeral 1 denotes in its entirety an apparatus for the steam cooking of foodstuffs according to this invention.

More specifically, the apparatus 1 comprises a supporting frame 2 on which are mounted a boiling chamber 3, a liquid reservoir 4 and a container 5 for the cooking of the foodstuffs. In other words, the apparatus 1 defines a single module for containing the liquid, boiling the liquid and cooking the foodstuffs by means of the steam produced when the liquid boils. It should be noted that the "liquid" preferably comprises water. In other embodiments, however, the liquid might comprise water mixed with other substances or even other kinds of liquid not expressly mentioned herein.

More specifically, the boiling chamber 3, in use, contains a liquid to be boiled in order to generate steam. More precisely, the boiling chamber 3 is defined by a bottom wall 6 and a side wall 7.

Further, the boiling chamber 3 is operatively (preferably not physically) divided into a first space for containing the liquid to be boiled and a second space for forming the steam, located above the first space and in fluid connection therewith. In other words, the first space is included between the bottom wall 6 of the boiling chamber 3 and the liquid level, whilst the second space is included between the liquid level and an upper part of the boiling chamber 3. The upper part of the boiling chamber 3 is the part that faces the bottom wall 6. Preferably, the upper part 8 of the boiling chamber 3 is not closed in a sealed manner. In other words, the boiling chamber 3 is not a boiler like those of the prior art. In yet other words, the boiling chamber 3 is open.

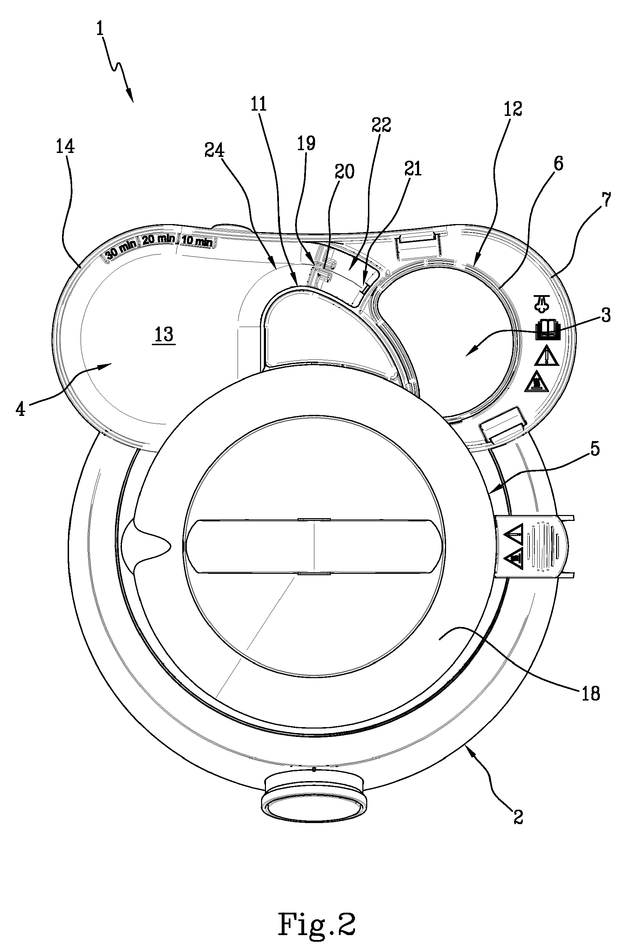

As may be seen in Figure 2, the side wall 7 of the boiling chamber 3 extends away from the bottom wall 6 in a direction substantially transversal thereto. Preferably, the side wall 7 of the boiling chamber 3 extends away from the bottom wall 6 in a direction at right angles to the bottom wall 6.

In other words, defining an evaporation direction 9 as the direction from the first space to the second space, the side wall 7 of the boiling chamber 3 extends along that evaporation direction 9.

It should also be noted that the open upper part 8 preferably has an access mouth whose area is substantially equal to the area defined by the bottom wall 6. In other embodiments not illustrated in the accompanying drawings, the open upper part 8 has an access mouth whose area is 3cm² larger so as to be easily accessible by the user.

In effect, since the boiling chamber 3 is not sealed (unlike apparatuses of the "boiler" type, for example), it advantageously facilitates internal cleaning operations which would otherwise be difficult to carry out.

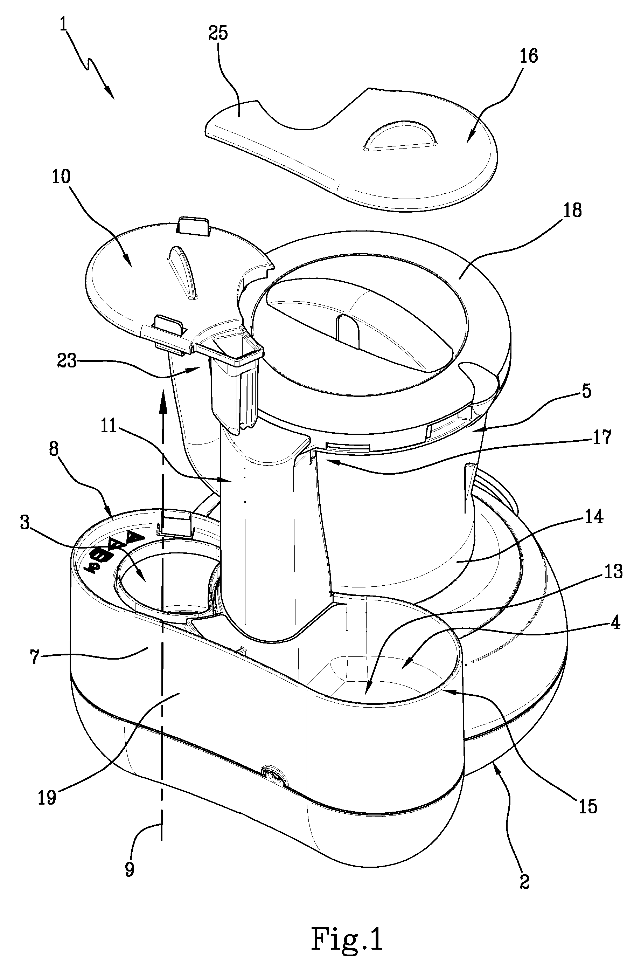

As shown in Figures 1, 3 and 4, the apparatus 1 also comprises a conveying lid 10 for closing the upper part of the boiling chamber 3. More specifically, the conveying lid 10 is shaped to match the edge of the upper part 8 of the boiling chamber 3 so as to close the latter at the top to prevent steam from being dispersed into the outside atmosphere. Still more preferably, the conveying lid 10 is configured to convey the steam from the second space to the operating duct 11 (connecting the boiling chamber 3 to the container 5) as explained in more detail below.

The apparatus 1 also comprises heating means 12 associated with the boiling chamber 3 for heating the liquid contained therein in order to generate the steam. Preferably, the heating means 12 are electrical and comprise at least one electrical resistor. Figure 2 shows that the heating means 12 comprise a metal plate with which the electrical resistor is associated. In practice, during use, the metal plate transfers heat to the liquid inside the boiling chamber 3.

It should also be noted that the heating means 12 are preferably associated with the bottom wall 6 of the boiling chamber 3 so that the liquid is located above them.

In other words, the boiling chamber 3 and the heating means 12 define an open-top kettle.

The apparatus 1 also comprises a liquid reservoir 4 placed in fluid communication with the boiling chamber 3 to supply the liquid to the latter. In other words, the reservoir 4 stores the liquid to be supplied to the boiling chamber 3.

Preferably, the reservoir 4 comprises a respective bottom wall 13 and a respective side wall 14. Further, like the boiling chamber 3, the reservoir 4, too, is open at the top so that it can be easily filled by an operator. More precisely, the reservoir 4 has a respective open upper side 15. The open upper side 15 preferably has an access mouth whose area is substantially equal to the area defined by the bottom wall 13. In other embodiments not illustrated in the accompanying drawings, the open upper side 15 has an access mouth whose area is 3cm² larger so as to be easily accessible by the user.

As shown in Figure 1, the apparatus 1 also preferably comprises a safety lid 16 to close the top of the reservoir 4. More specifically, the safety lid 16 is shaped to match the upper side 15 of the reservoir 4 in such a way as to cover the top thereof.

Further, in the preferred embodiment, the reservoir 4 and the boiling chamber 3 are laterally spaced along a substantially horizontal direction. in the preferred embodiment, the bottom wall 6 of the boiling chamber 3 and the bottom wall 13 of the reservoir 4 are substantially parallel.

In other embodiments not illustrated in the accompanying drawings, however, the reservoir 4 may be located around at least part of the boiling chamber 3 or the boiling chamber 3 may be located around at least part of the reservoir 4.

The apparatus 1 also comprises a foodstuffs cooking container 5 in fluid communication with the second space of the boiling chamber 3 in order to receive the steam therefrom. In other words, the container 5 contains the foodstuffs that have to be steam cooked during operation of the apparatus 1.

More specifically, as already mentioned, the apparatus 1 comprises an operating duct 11 which extends between the boiling chamber 3 and the container 5. More specifically, the operating duct 11 is in fluid communication with the second space of the boiling chamber 3 to receive therefrom the steam produced. In the preferred embodiment, illustrated by way of example in Figure 2, the operating duct 11 extends away from the boiling chamber 3 along the evaporation direction 9 from the first space to the second space. Further, the part of the operating duct 11 at the boiling chamber 3 is interposed between the reservoir 4 and the boiling chamber 3 itself.

Lastly, in the preferred embodiment, the operating duct 11 extends vertically and is in fluid communication with the container 5 at the upper portion 17 thereof. More specifically, the container 5 is open at its upper portion 17 so as to allow the foodstuffs to be placed therein. Preferably, the container 5 is substantially tapered in shape along a direction parallel to the evaporation direction 9.

The container 5 also comprises a removable lid 18 located at its upper portion 17 in order to cover the container 5 while the foodstuffs are being steam cooked.

As may also be noted in the drawings, the reservoir 4, the boiling chamber 3 and the container 5 are positioned laterally of each other. In other words, the reservoir 4, the boiling chamber 3 and the container 5 are substantially juxtaposed with each other.

According to the invention, the apparatus 1 comprises a feed duct 19 extending between the reservoir 4 and the boiling chamber 3 and in fluid communication with them in such a way as to carry the liquid from the reservoir 4 to the boiling chamber 3. More specifically, the feed duct 19 extends between its first end 20 at the reservoir 4 and its second end 21 at the boiling chamber 3.

More specifically, the second end 21 of the feed duct 19 is at the first space of the boiling chamber 3 so that, in use, it is immersed in the liquid. In other words, the second end 21 of the duct is located in the proximity of the bottom wall 6 of the boiling chamber 3. Similarly, also the first end 20 of the duct is located in the proximity of the bottom wall 13 of the reservoir 4. The feed duct 19 thus extends transversely to the evaporation direction 9 (from the first space to the second space) at the bottom walls 6, 13. Preferably, the feed duct 19 extends at right angles to the evaporation direction 9.

Advantageously, the feed duct 19 creates the fluid communication from the reservoir 4 to the boiling chamber 3 according to the principle of communicating vessels so that liquid is supplied continuously by the reservoir 4 to the boiling chamber 3. In effect, that way, the feed duct 19 allows keeping the boiling chamber 3 full at all times because the liquid feed system self adjusts according to the principle of communicating vessels. Consequently, as the liquid in the boiling chamber 3 is used up (by evaporation) more liquid is supplied continuously by the reservoir 4.

More in detail, the position of the feed duct 19 at the bottom walls 6, 13 creates the fluid communication according to the principle of communicating vessels. In other words, the ends 20, 21 of the feed duct 19 are located below the level of the liquid.

More precisely, the feed duct 19 is in fluid communication with the boiling chamber 3 only at the first space.

Also, as shown in Figure 2, the bottom wall 13 of the reservoir 4, the bottom wall 6 of the boiling chamber 3. and the feed duct 19 are located at substantially the same height along a vertical direction. Preferably, the bottom wall 13 of the reservoir 4, the bottom wall 6 of the boiling chamber 3 and the feed duct 19 are coplanar with each other. According to another viewpoint, as shown in the accompanying drawings, the boiling chamber 3 and the reservoir 4 are portions of a single vessel. More in detail, between the boiling chamber 3 and the reservoir 4 this vessel has a neck which defines the feed duct 19. Preferably, the neck is defined by the presence of the operating duct 11 interposed between the boiling chamber 3 and the reservoir 4.

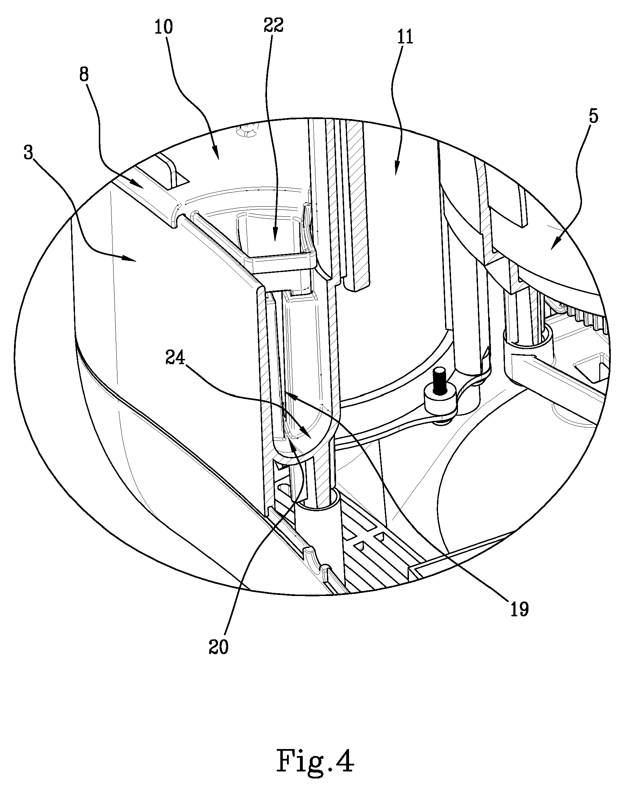

The apparatus 1 comprises heat insulation means 22 located between the reservoir 4 and the boiling chamber 3 to keep the liquid in the reservoir 4 at a temperature below the temperature of the liquid in the boiling chamber 3. Preferably, the heat insulation means 22 are located between the reservoir 4 and the boiling chamber 3 at least for part of the space surrounding the feed duct 19. More in detail, as may be observed in Figure 4, the heat insulation means 22 are positioned above the feed duct 19 along the evaporation direction 9.

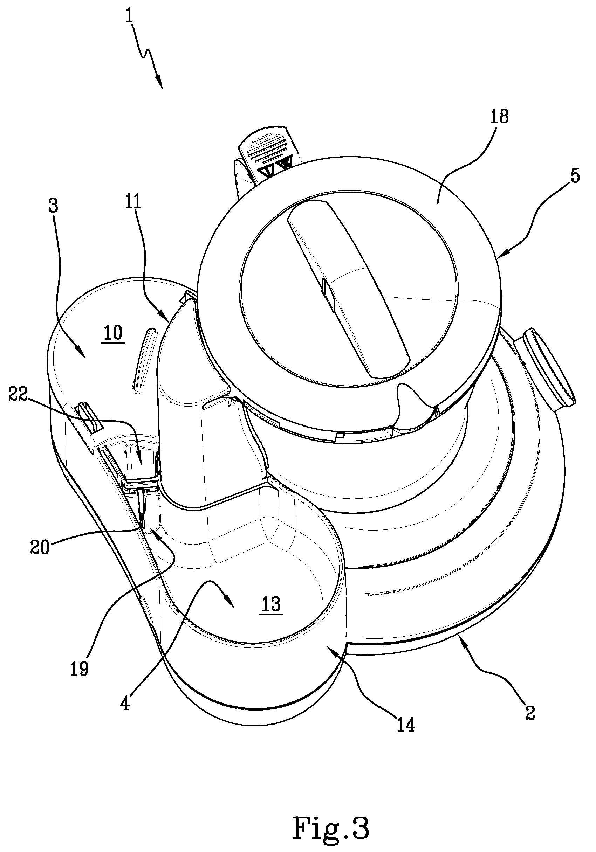

In the preferred embodiment, the heat insulation means 22 are defined by an air gap. With reference to Figure 3, it may be observed that the air gap is defined inside a moulded portion of the conveying lid 10 in the direction of the feed duct 19. In other words, the conveying lid 10 comprises a lateral portion 23 located at the feed duct 19 and extending towards that duct. This portion defines the air gap. In yet other words, the feed duct 19 is defined between the air gap and a lower wall 24 interposed between the two bottom walls 6, 13.

In addition, as may be observed in Figure 1, the air gap is open at the top. In effect, the safety lid 16 has a side wing 25 which, when the reservoir 4 is closed, is positioned over the air gap in such a way as to close it off from the outside. In other words, when the conveying lid 10 and the safety lid 16 close the boiling chamber 3 and the reservoir 4, respectively, they form at the top a substantially uninterrupted covering surface.

It should also be noted that the cross section size of the feed duct 19 is inversely proportional to the power of the heating means 12 so as to prevent the backflow of a large quantity of hot liquid from the boiling chamber 3 to the reservoir 4. In other words, the more powerful the heating means 12, the narrower the cross section of the feed duct 19 is, in order to prevent heat from being transferred towards the reservoir 4. That way, since the reservoir 4 is handled by the user (to fill it with liquid), it is heated as little as possible.

The reservoir 4 also comprises a plurality of level notches 28 at different heights from the bottom wall 13 in a vertical direction. Each notch 28 represents an expected evaporation time for a respective level of liquid defined by the height of the selfsame notch 28 with respect to the bottom wall 13.

In effect, since the reservoir 4 and the boiling chamber 3 are communicating vessels through the feed duct 19, it is possible to determine the feed flow rate and, consequently, the evaporation time of a certain quantity of liquid (obviously knowing the operating power of the heating means 12).

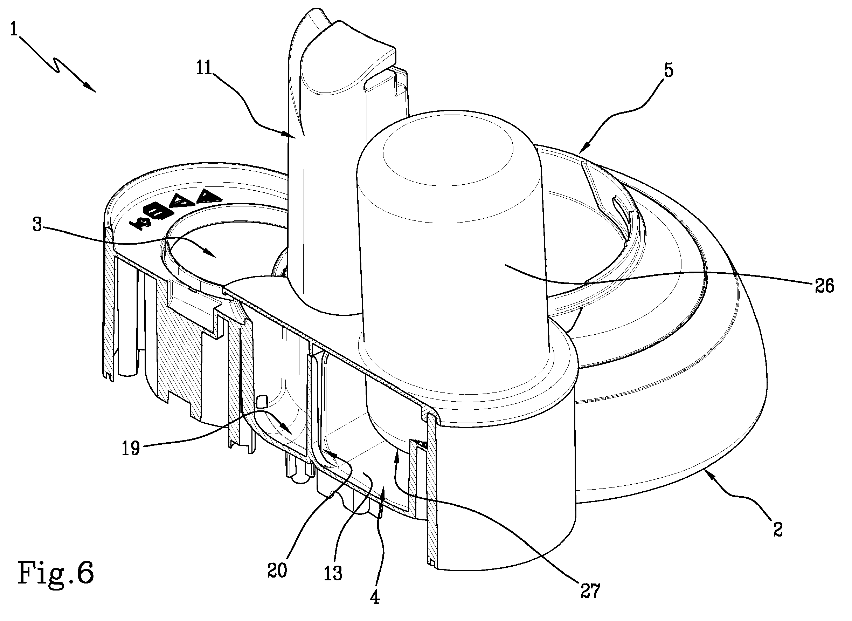

It should be noted that the expression "power of the heating means 12" represents the time needed to heat a defined quantity of liquid from a first defined temperature to a second defined temperature. In other words, the greater the power of the heating means 12 the shorter the time taken to heat the defined quantity of liquid between the two defined temperatures. Further, in an embodiment illustrated in Figure 6, the reservoir 4 is defined by a container 26 closed at the top and of a type which is removable from the rest of the apparatus 1. More specifically, the container 5 has a single opening 27 located at the feed duct 19 to draw the liquid towards it.

In that case, the liquid level in the reservoir 4 is higher than the liquid level in the boiling chamber 3 in a vertical direction. In effect, since the reservoir 4 is a container 5 which is closed at the top, the pressure in the upper section of the container 5 is lower than the atmospheric pressure acting on the liquid in the boiling chamber 3.

Preferably, in that case, the container 5 comprises an upturned bottle having an opening located at the feed duct 19.

The apparatus may also comprise means for pureeing the foodstuffs, operatively associated with the container 5 and located inside the frame 2 of the apparatus 1 (not illustrated in the accompanying drawings). Thus, after (or before) being steam cooked, the foodstuffs can be pureed.

The operation of the invention can be inferred from the foregoing. More specifically, when liquid is filled into the reservoir 4, it automatically also goes into the boiling chamber 3 up to a user defined level . More specifically, the user can fill the reservoir 4 up to one of the notches 28 inside it so as to have an immediate estimate of the time needed to produce the steam. That way, the heating means 12 heat the part of the liquid which has entered the boiling chamber 3, which is less than the total quantity of liquid inside the reservoir 4 and the boiling chamber 3 together. Thus, the liquid is heated more quickly than in the prior art because there is less liquid to heat at a time.

The invention thus achieves the preset aims.

In particular, the invention allows increasing the initial steam production speed. In effect, the apparatus heats a limited amount of liquid (only that contained in the boiling chamber) compared to the total amount contained in both the reservoir an the boiling chamber.

Furthermore, the reservoir of the apparatus feeds liquid to the boiling chamber continuously by means of the system of communicating vessels, thus avoiding down time connected with the topping up of the boiling chamber. In other words, the reservoir can be topped up continually and automatically without interrupting steam production between one topping up and the next.

Moreover, the apparatus facilitates cleaning of the boiling chamber and reservoir. In effect, since both the boiling chamber and the reservoir are open at the top, the operator has easy access to the interior for periodic cleaning purposes.

It should also be noted that this invention is relatively easy to implement and that the cost of implementing the invention is relatively low.

## Claims

1. An apparatus (1) for the steam cooking of foodstuffs, comprising:
- a boiling chamber (3) which, in use, contains a liquid to be boiled in order to generate the steam; the boiling chamber (3) being operatively divided into a first space for containing the liquid to be boiled and a second space for forming the steam, located above the first space and in fluid connection therewith;
- heating means (12) associated with the boiling chamber (3) for heating the liquid contained therein in order to generate the steam;
- a liquid reservoir (4) placed in fluid communication with the boiling chamber (3) to supply the liquid to the latter;
- a foodstuffs cooking container (5) in fluid communication with the second space of the boiling chamber (3) in order to receive the steam therefrom;
- a feed duct (19) extending between the reservoir (4) and the boiling chamber (3) at the first space of the boiling chamber (3) in such a way as to allow fluid communication from the reservoir (4) to the boiling chamber (3) according to the principle of communicating vessels so that liquid is supplied continuously by the reservoir (4) to the boiling chamber (3);
said reservoir (4) and the boiling chamber (3) being laterally spaced along a substantially horizontal direction;
**characterized in that** the reservoir (4) has a respective open upper side (15); said feed duct (19) extending between its first end (20) at the reservoir (4) and its second end (21) at the boiling chamber (3); the apparatus (1) comprising heat insulation means (22) located between the reservoir (4) and the boiling chamber (3) to keep the liquid in the reservoir (4) at a temperature below the temperature of the liquid in the boiling chamber (3); the heat insulation means (22) being located between the reservoir (4) and the boiling chamber (3) at least for part of the space surrounding the feed duct (19).

2. The apparatus (1) according to claim 1, **characterized in that** the feed duct (19) is in fluid communication with the boiling chamber (3) only at the first space.

3. The apparatus (1) according to either of the preceding claims, **characterized in that** the heat insulation means (22) are positioned above the feed duct (19) along an evaporation direction (9) from the first space to the second space.

4. The apparatus (1) according to any one of the preceding claims, **characterized in that** the reservoir (4) has a respective bottom wall (13) and the boiling chamber (3) has a respective bottom wall (6); the bottom wall (13) of the reservoir (4) and the bottom wall (6) of the boiling chamber (3) being located at substantially the same height along a vertical direction.

5. The apparatus (1) according to any one of the preceding claims, **characterized in that** the reservoir (4) and the boiling chamber (3) are open at the top so as to be accessible to an operator.

6. The apparatus (1) according to any one of claims 1 to 4, **characterized in that** the reservoir (4) is defined by a container (5) closed at the top and having an opening located at the feed duct (19) to carry the liquid to it.

7. The apparatus (1) according to claim 6, **characterized in that** the reservoir (4) is removable from the rest of the apparatus (1).

8. The apparatus (1) according to any one of the preceding claims, **characterized in that** the reservoir (4) comprises a plurality of level notches (28) located at different heights in a vertical direction and each representing a respective liquid level; each notch (28) also representing an expected evaporation time for a respective level of liquid.

9. The apparatus (1) according to any one of the preceding claims, **characterized in that** the cross section size of the feed duct (19) is inversely proportional to the power of the heating means (12) so as to prevent the backflow of hot liquid from the boiling chamber (3) to the reservoir (4).

10. The apparatus (1) according to any one of the preceding claims, **characterized in that** the feed duct (19) extends transversely to the evaporation direction (9), which goes from the first space to the second space, at the bottom walls (6, 13) of the reservoir (4) and boiling chamber (3), respectively.

11. The apparatus (1) according to claim 10, **characterized in that** the bottom wall (13) of the reservoir (4), the bottom wall (6) of the boiling chamber (3) and the feed duct (19) are located at substantially the same height along a vertical direction.

12. The apparatus (1) according to any one of the preceding claims, **characterized in that** the boiling chamber (3) and the reservoir (4) are portions of a single vessel between the boiling chamber (3) and the reservoir (4) this vessel having a neck which defines the feed duct (19).

13. The apparatus (1) according to any one of the preceding claims, **characterized in that** the heat insulation means (22) are embodied by an air gap.

14. The apparatus (1) according to claim 13, **characterized in that** the apparatus (1) also comprises a conveying lid (10) for closing the upper part of the boiling chamber (3); said air gap being defined inside a moulded portion of a conveying lid (10) in the direction of the feed duct (19); the feed duct (19) being defined between the air gap and a lower wall (24) interposed between the two bottom walls (6, 13) of the reservoir (4) and of the boiling chamber (3) respectively.

15. The apparatus (1) according to any one of the preceding claims, **characterized in that** the boiling chamber (3) is located outside the space occupied by the reservoir (4).

## Patentansprüche

1. Vorrichtung (1) zum Dampfgaren von Nahrungsmitteln, umfassend:
- eine Siedekammer (3), die in Verwendung eine zu siedende Flüssigkeit enthält, um den Dampf zu erzeugen, wobei die Siedekammer (3) betriebswirksam in einen ersten Bereich zum Enthalten der zu siedenden Flüssigkeit und einen zweiten Bereich zum Bilden des Dampfs, der sich oberhalb des ersten Bereichs und in Fluidkommunikation damit befindet, getrennt ist;
- Heizmittel (12), die mit der Siedekammer (3) verbunden sind, um die darin enthaltene Flüssigkeit zu erhitzen und den Dampf zu erzeugen;
- ein Flüssigkeitsspeichergefäß (4), das in Fluidkommunikation mit der Siedekammer (3) steht, um diesem die Flüssigkeit zuzuführen;
- einen Behälter zum Garen von Nahrungsmitteln (5) in Fluidkommunikation mit dem zweiten Bereich der Siedekammer (3), um den Dampf davon zu erhalten;
- eine Zuführungsleitung (19), die sich zwischen dem Speichergefäß (4) und der Siedekammer (3) am ersten Bereich der Siedekammer (3) so erstreckt, dass sie die Fluidkommunikation vom Speichergefäß (4) zur Siedekammer (3) nach dem Grundsatz kommunizierender Druckbehälter erlaubt, sodass die Flüssigkeit kontinuierlich vom Speichergefäß (4) der Siedekammer (3) zugeführt wird, wobei das Speichergefäß (4) und die Siedekammer (3) seitlich entlang einer im Wesentlichen waagerechten Richtung beabstandet ist, **dadurch gekennzeichnet, dass** das Speichergefäß (4) eine jeweilige offene obere Seite (15) besitzt, wobei sich die Zuführungsleitung (19) zwischen deren erstem Ende (20) am Speichergefäß (4) und deren zweitem Ende (21) an der Siedekammer (3) erstreckt, wobei die Vorrichtung (1) Wärmeisolierungsmittel (22) umfasst, die zwischen dem Speichergefäß (4) und der Siedekammer (3) platziert sind, um die Flüssigkeit im Speichergefäß (4) bei einer Temperatur unter der Temperatur der Flüssigkeit in der Siedekammer (3) beizubehalten, wobei die Wärmeisolierungsmittel (22) zwischen dem Speichergefäß (4) und der Siedekammer (3) mindestens für einen Teil des Bereichs, der die Zuführungsleitung (19) umgibt, angeordnet sind.

2. Vorrichtung (1) nach Anspruch 1, **dadurch gekennzeichnet, dass** die Zuführungsleitung (19) in Fluidkommunikation mit der Siedekammer (3) nur am ersten Bereich steht.

3. Vorrichtung (1) nach einem der vorhergehenden Ansprüche, **dadurch gekennzeichnet, dass** die Wärmeisolierungsmittel (22) oberhalb der Zuführungsleitung (19) entlang einer Verdampfungsrichtung (9) vom ersten Bereich zum zweiten Bereich positioniert sind.

4. Vorrichtung (1) nach einem der vorhergehenden Ansprüche, **dadurch gekennzeichnet, dass** das Speichergefäß (4) eine jeweilige unterseitige Wand (13) aufweist und die Siedekammer (3) eine jeweilige unterseitige Wand (6) aufweist, wobei die unterseitige Wand (13) des Speichergefäßes (4) und die unterseitige Wand (6) der Siedekammer (3) im Wesentlichen auf derselben Höhe entlang einer vertikalen Richtung angeordnet sind.

5. Vorrichtung (1) nach einem der vorhergehenden Ansprüche, **dadurch gekennzeichnet, dass** das Speichergefäß (4) und die Siedekammer (3) an der Oberseite offen sind, sodass sie für einen Bediener zugänglich sind.

6. Vorrichtung (1) nach einem der Ansprüche 1 bis 4, **dadurch gekennzeichnet, dass** das Speichergefäß (4) durch einen Behälter (5) definiert ist, der an der Oberseite geschlossen ist und eine Öffnung aufweist, die an der Zuführungsleitung (19) angeordnet ist, um dieser die Flüssigkeit zuzuleiten.

7. Vorrichtung (1) nach Anspruch 6, **dadurch gekennzeichnet, dass** das Speichergefäß (4) vom Rest der Vorrichtung (1) entfernt werden kann.

8. Vorrichtung (1) nach einem der vorhergehenden Ansprüche, **dadurch gekennzeichnet, dass** das Speichergefäß (4) eine Vielzahl an ebenen Niveaumarkierungen (28) umfasst, die auf unterschiedlichen Höhen in einer vertikalen Richtung angeordnet sind und jeweils ein jeweiliges Flüssigkeitsniveau darstellen, wobei jede Markierung (28) auch eine erwartete Verdampfungszeit für ein jeweiliges Flüssigkeitsniveau darstellt.

9. Vorrichtung (1) nach einem der vorhergehenden Ansprüche, **dadurch gekennzeichnet, dass** die Querschnittabmessung der Zuführungsleitung (19) umgekehrt proportional zur Leistung der Heizmittel (12), sodass der Rückfluss heißer Flüssigkeit von der Siedekammer (3) in das Speichergefäß (4) vermieden wird.

10. Vorrichtung (1) nach einem der vorhergehenden Ansprüche, **dadurch gekennzeichnet, dass** sich die Zuführungsleitung (19) quer zur Verdampfungsrichtung (9) erstreckt, die vom ersten Bereich zum zweiten Bereich an den unterseitigen Wänden (6, 13) jeweils des Speichergefäßes (4) bzw. der Siedekammer (3) verläuft.

11. Vorrichtung (1) nach Anspruch 10, **dadurch gekennzeichnet, dass** sich die unterseitige Wand (13) des Speichergefäßes (4), die unterseitige Wand (6) der Siedekammer (3) und die Zuführungsleitung (19) im Wesentlichen auf derselben Höhe entlang einer vertikalen Richtung befinden.

12. Vorrichtung (1) nach einem der vorhergehenden Ansprüche, **dadurch gekennzeichnet, dass** die Siedekammer (3) und das Speichergefäß (4) Abschnitte eines einzelnen Druckbehälters zwischen der Siedekammer (3) und dem Speichergefäß (4) sind, wobei der Druckbehälter einen Hals aufweist, der die Zuführungsleitung (19) definiert.

13. Vorrichtung (1) nach einem der vorhergehenden Ansprüche, **dadurch gekennzeichnet, dass** die Wärmeisolierungsmittel (22) durch einen Luftspalt dargestellt sind.

14. Vorrichtung (1) nach Anspruch 13, **dadurch gekennzeichnet, dass** die Vorrichtung (1) zudem einen Förderdeckel (10) umfasst, um den oberseitigen Teil der Siedekammer (3) zu verschließen, wobei der Luftspalt in einem geformten Abschnitt eines Förderdeckels (10) in der Richtung der Zuführungsleitung (19) definiert ist, wobei die Zuführungsleitung (19) zwischen dem Luftspalt und einer unteren Wand (24) definiert ist, eingesetzt zwischen den zwei unterseitigen Wänden (6, 13) jeweils des Speichergefäßes (4) bzw. der Siedekammer (3).

15. Vorrichtung (1) nach einem der vorhergehenden Ansprüche, **dadurch gekennzeichnet, dass** sich die Siedekammer (3) außerhalb des Bereichs
befindet, der vom Speichergefäß (4) eingenommen ist.

## Revendications

1. Appareil (1) de cuisson à vapeur d'aliments, comprenant :
- une chambre d'ébullition (3) qui, en fonctionnement, contient un liquide à bouillir afin de générer de la vapeur ; la chambre d'ébullition (3) étant fonctionnellement divisée en un premier espace destiné à contenir le liquide à bouillir et un second espace, destiné à former la vapeur, situé au-dessus du premier espace et en raccordement fluidique avec celui-ci ;
- des moyens chauffants (12) associés à la chambre d'ébullition (3) destinés à chauffer le liquide contenu dans celle-ci afin de générer la vapeur ;
- un réservoir à liquide (4) placé en communication fluidique avec la chambre d'ébullition (3) pour alimenter en liquide cette dernière ;
- un récipient de cuisson d'aliments (5) en communication fluidique avec le second espace de la chambre d'ébullition (3) afin de recevoir la vapeur de celui-ci ;
- un conduit d'alimentation (19) se prolongeant entre le réservoir (4) et la chambre d'ébullition (3) au niveau du premier espace de la chambre d'ébullition (3) de manière à permettre la communication fluidique du réservoir (4) à la chambre d'ébullition (3) selon le principe des vases communicants de sorte que le liquide soit alimenté en permanence par le réservoir (4) à la chambre d'ébullition (3) ; ledit réservoir (4) et la chambre d'ébullition (3) étant latéralement espacés le long d'une direction substantiellement horizontale ; **caractérisé en ce que** le réservoir (4) possède un côté supérieur ouvert respectif (15) ; ledit conduit d'alimentation (19) se prolongeant entre sa première extrémité (20) en correspondance du réservoir (4) et sa seconde extrémité (21) en correspondance de la chambre d'ébullition (3) ; l'appareil (1) comprenant des moyens calorifuges (22) situés entre le réservoir (4) et la chambre d'ébullition (3) pour conserver le liquide dans le réservoir (4) à une température inférieure à la température du liquide dans la chambre d'ébullition (3) ; les moyens calorifuges (22) étant situés entre le réservoir (4) et la chambre d'ébullition (3) au moins pour une partie de l'espace entourant le conduit d'alimentation (19).

2. Appareil (1) selon la revendication 1, **caractérisé en ce que** le conduit d'alimentation (19) est en communication fluidique avec la chambre d'ébullition (3) uniquement au niveau du premier espace.

3. Appareil (1) selon l'une quelconque des revendications précédentes, **caractérisé en ce que** les moyens calorifuges (22) sont positionnés au-dessus du conduit d'alimentation (19) le long d'une direction d'évaporation (9) du premier espace vers le second espace.

4. Appareil (1) selon l'une quelconque des revendications précédentes, **caractérisé en ce que** le réservoir (4) possède une paroi de fond (13) respective et la chambre d'ébullition (3) possède une paroi de fond (6) respective ; la paroi de fond (13) du réservoir (4) et la paroi de fond (6) de la chambre d'ébullition (3) étant substantiellement situées à la même hauteur le long d'une direction verticale.

5. Appareil (1) selon l'une quelconque des revendications précédentes, **caractérisé en ce que** le réservoir (4) et la chambre d'ébullition (3) sont ouverts au sommet de manière à être accessibles à un opérateur.

6. Appareil (1) selon l'une quelconque des revendications de 1 à 4, **caractérisé en ce que** le réservoir (4) est défini par un récipient (5) fermé au sommet et ayant une ouverture située au niveau du conduit d'alimentation (19) pour y acheminer le liquide.

7. Appareil (1) selon la revendication 6, **caractérisé en ce que** le réservoir (4) peut se détacher du reste de l'appareil (1).

8. Appareil (1) selon l'une quelconque des revendications précédentes, **caractérisé en ce que** le réservoir (4) comporte une pluralité de d'encoches de niveau (28) situées à différentes hauteurs dans une direction verticale et représentant chacune un niveau de liquide respectif ; chaque encoche (28) représentant aussi une durée d'évaporation prévue pour un niveau correspondant de liquide.

9. Appareil (1) selon l'une quelconque des revendications précédentes, **caractérisé en ce que** la dimension de la section transversale du conduit d'alimentation (19) est inversement proportionnelle à la puissance des moyens chauffants (12) de manière à empêcher le reflux de liquide chaud de la chambre d'ébullition (3) au réservoir (4).

10. Appareil (1) selon l'une quelconque des revendications précédentes, **caractérisé en ce que** le conduit d'alimentation (19) se prolonge transversalement à la direction d'évaporation (9) allant du premier espace au second espace, en correspondance, respectivement, des parois de fond (6, 13) du réservoir (4) et de la chambre d'ébullition (3).

11. Appareil (1) selon la revendication 10, **caractérisé en ce que** la paroi de fond (13) du réservoir (4), la paroi de fond (6) de la chambre d'ébullition (3) et le conduit d'alimentation (19) sont substantiellement situés à la même hauteur le long d'une direction verticale.

12. Appareil (1) selon l'une quelconque des revendications précédentes, **caractérisé en ce que** la chambre d'ébullition (3) et le réservoir (4) constituent des portions d'un unique récipient entre la chambre d'ébullition (3) et le réservoir (4), ce récipient ayant un col qui définit le conduit d'alimentation (19).

13. Appareil (1) selon l'une quelconque des revendications précédentes, **caractérisé en ce que** les moyens calorifuges (22) sont définis par un intervalle d'air.

14. Appareil (1) selon la revendication 13, **caractérisé en ce que** l'appareil (1) comprend aussi un couvercle de guidage (10) destiné à fermer la partie supérieure de la chambre d'ébullition (3) ; ledit intervalle d'air étant défini à l'intérieur d'une partie moulée d'un couvercle de guidage (10) dans la direction du conduit d'alimentation (19) ; le conduit d'alimentation (19) étant défini entre l'intervalle d'air et une paroi inférieure (24) interposée, respectivement, entre les deux parois inférieures (6, 13) du réservoir (4) et de la chambre d'ébullition (3).

15. Appareil (1) selon l'une quelconque des revendications précédentes, **caractérisé en ce que** la chambre d'ébullition (3) est située à l'extérieur de l'espace occupé par le réservoir (4).
